Europäisches Patentamt

**European Patent Office**

Office européen des brevets

(11) Numéro de publication: **0 378 837**
**A1**

## (12) DEMANDE DE BREVET EUROPEEN

(21) Numéro de dépôt: 89123641.6

(22) Date de dépôt: 21.12.89

(51) Int. Cl.5: **C01F 11/46, C09C 1/02,**
**D21H 13/46, D21H 17/67,**
**D21H 19/38, C08K 7/04,**
**C08K 3/30, C04B 14/38**

Le titre de l'invention a été modifié (Directives relatives à l'examen pratiqué à l'OEB, A-III, 7.3)

(30) Priorité: 22.12.88 FR 8817450

(43) Date de publication de la demande:
**25.07.90 Bulletin 90/30**

(84) Etats contractants désignés:
**AT BE CH DE ES GB GR IT LI NL SE**

(71) Demandeur: **LAFARGE COPPEE**
**28, rue Emile Ménier**
**F-75782 Paris Cedex 16(FR)**

(72) Inventeur: **Petit Alain**
**11 rue Mozart Lotissement Saint-Joseph**
**F-26200 Montélimar(FR)**

(74) Mandataire: **Eggert, Hans-Gunther, Dr.**
**Räderscheidtstrasse 1**
**D-5000 Köln 41(DE)**

(54) **Préparation de sulfate de calcium dihydrate à structure cristalline longiligne.**

(57) Sulfate de calcium dihydraté sous forme de structures cristallines longilignes ainsi que les structures cristallines longilignes obtenues, dont les caractéristiques de longueur et de facteur de forme sont distribuées d'une manière contrôlée et maîtrisée selon un modèle proche du modèle gaussien de probabilité, et procédé de son préparation utilisant comme matière première du sulfate de calcium semihydraté prélevé à la sortie de la zone de transformation thermique du gypse préalablement à toute action de broyage.

FIGURE 2
Echelle: 1,00 cm = 10 µm

EP 0 378 837 A1

EP 0 378 837 A1

## DOMAINE DE L'INVENTION

L'invention concerne un procédé de préparation de sulfate de calcium dihydraté sous forme de structures cristallines longilignes ainsi que les structures cristallines longilignes obtenues, dont les caractéristiques de longueur et de facteur de forme sont distribuées d'une manière contrôlée et maîtrisée selon un modèle proche du modèle gaussien de probabilité, ledit procédé utilisant comme matière première du sulfate de calcium semihydraté prélevé à la sortie de la zone de transformation thermique du gypse préalablement à toute action de broyage.

Telle qu'elle est utilisée l'expression "structure cristalline longiligne" désigne le domaine constitué par les cristaux individualisés se présentant sous l'aspect d'aiguilles ou bien constitué par lesdits cristaux associés au plus trois à trois selon leur grand axe, par recouvrement partiel.

De même, l'expression "facteur de forme" définit le rapport dimensionnel existant entre la longueur du cristal individuel ou des cristaux associés au plus trois à trois et leur plus grand diamètre.

## ARRIERE-PLAN DE L'INVENTION

Depuis longtemps, la littérature spécialisée a largement décrit les diverses formes chimiques et cristallines du sulfate de calcium.

Les formes chimiques les plus communément connues sont le sulfate de calcium dihydraté de formule $CaSO4,2H2O$ dénommé gypse dans le règne minéral, qu'il soit d'origine naturelle ou synthétique (tel que phosphogypse, désulfogypse ou gypse provenant de neutralisation chimique) ; le sulfate de calcium semihydraté de formule $CaSO4,1/2\ H2O$ résultant du traitement thermique du gypse (à sec ou en présence d'eau sous forme liquide ou vapeur) entre 90°C et 180°C ; les anhydrites I, II et III de formule $CaSO4$, l'une étant dite soluble (anhydrite III) quand le traitement est pratiqué à une température choisie dans l'intervalle 100°C à 250°C, les autres étant dites insolubles quand le traitement thermique dépasse la température de 250°C (anhydrite II ou surcuit) ou de 1 200°C (anhydrite I).

Hors les différentes formules chimiques qui viennent d'être évoquées, le sulfate de calcium est également identifiable par sa structure cristalline. Ainsi, il peut avoir un aspect polymorphe ou bien se présenter sous des structures cristallines distinctes telles que cubique, hexagonale, monoclinique ou clinorhombique, orthorombique.

Ces structures cristallines, au moins pour certaines d'entre elles, conduisent à des formes longilignes qui, individuellement ou associées, sont connues sous les appellations de fibres aciculaires, d'aiguilles, de trichites, de whiskers dont il est établi que le sulfate de calcium peut s'y trouver dans un état dihydraté, semihydraté ou anhydre.

Or, selon les conditions du traitement thermique appliqué au gypse, c'est-à-dire au sulfate de calcium dihydraté, pour en provoquer la déshydratation, le sulfate de calcium semihydraté résultant peut exister sous l'une ou l'autre des variétés "α" (traitement thermique sous pression de vapeur d'eau au moins égale à la pression atmosphérique) ou "β" (traitement thermique à pression atmosphérique), ces deux variétés se distinguant l'une de l'autre par des différences, par exemple de masse volumique (variété "α", environ 2,75 $g/cm^3$ et variété "β" environ 2,60 $g/cm^3$), de chaleur d'hydratation, de température de transformation chimique ou autre.

D'une manière générale, la variété "β" du semihydrate est la plus privilégiée des deux variétés car, obtenue grâce à des procédés continus de déshydratation, elle est industriellement rendue attractive par son faible coût de production et est, dès lors, très largement utilisée pour la fabrication du plâtre. Mais cette variété "β" du semihydrate n'est généralement pas encline à disposer d'une longueur et d'un facteur de forme maîtrisés et, dès lors est démunie d'intérêt pour certaines applications.

Toutefois, la variété "α" du semihydrate, bien qu'elle soit produite en général par des procédés discontinus plus complexes et coûteux, n'est pas dénuée d'intérêt car, outre de nombreuses propriétés bien connues de l'homme de l'art, elle est reconnue pouvoir détenir un facteur de forme (dont la variété "β" est le plus souvent dépourvue) propice à des emplois spécifiques puisqu'elle peut être obtenue sous l'aspect d'une structure cristalline longiligne.

Tout l'intérêt d'une telle structure cristalline longiligne est perçu dès lors qu'elle est mise en oeuvre dans des domaines industriels où cette particularité l'autorise à jouer, par exemple, un rôle de renfort (dans les matériaux de construction tels que poutres, gaines, planchers...) ou un rôle de charge (dans les matériaux polymères par exemple) pour en améliorer les caractéristiques mécaniques.

Dans certains cas, il peut être souhaitable de conférer aux matériaux à charger une compacité

2

maximale grâce à l'occupation des vides se créant accidentellement entre les structures cristallines après leur inclusion, afin de renforcer par exemple certaines caractéristiques mécaniques particulièrement recherchées.

Or la compacité maximale de ces matériaux à charger ne peut pas être pleinement atteinte quand les structures cristallines longilignes utilisées ont des caractéristiques dimensionnelles par trop régulières entre elles (longueur et diamètre très proches d'une structure à l'autre). A fortiori, cette compacité maximale ne pourra jamais être acquise si les structures cristallines sont anarchiques par leurs formes et leurs dimensions comme c'est le cas, par exemple, dans un mélange d'aiguilles, de mâcles, d'agglomérats et de fers de lance.

Comme on peut l'imaginer, une des applications des structures cristallines longilignes de sulfate de calcium peut être de faciliter l'obtention d'une compacité maximale d'un matériau à charger (grâce à leur introduction) si lesdites structures ont des caractères dimensionnels (longueur, diamètre et éventuellement facteur de forme) complémentaires leur permettant de s'organiser naturellement entre elles au sein des matériaux en empêchant la formation des vides.

Comme le montre la littérature spécialisée, de nombreux procédés ont voulu apporter leur contribution à la maîtrise des conditions d'obtention de telle ou telle structure cristalline longiligne et des caractéristiques dimensionnelles de ces structures.

Un premier type de procédé consiste à traiter thermiquement du gypse, sous pression en milieu aqueux, pour le transformer, le plus souvent en présence de différentes substances, en sulfate de calcium semihydraté de variété "α", muni d'un facteur de forme relativement constant, c'est-à-dire, longueur et diamètre évoluant proportionellement.

Un tel procédé, destiné à la production de fibres du type trichite et illustré par le brevet français FR 2,179,760, réside en un traitement thermique sous pression d'une suspension aqueuse de sulfate de calcium dihydraté à une température comprise entre 105°C et 150°C jusqu'à la formation desdites fibres du type sulfate de calcium semihydraté de variété "α". Ces fibres, une fois formées, sont recueillies à chaud et stabilisées pour éviter une réhydratation destructive du facteur de forme, la stabilisation se faisant soit par une calcination, soit encore par un traitement au moyen d'un agent imperméabilisant, tel que hydrolisats de protéines, polymères d'acides polycarboxyliques ou autres polymères (brevets allemands DE 2,702,097 et DE 2,702,100).

Un autre procédé relevant de ce premier type de traitement (brevet français FR 2,415,077) conseille, dans le but de produire des fibres de sulfate de calcium semihydraté de variété "α", d'introduire dans la suspension aqueuse de gypse un agent dispersant (tel que tanin ou acide tanique). Après cet ajout, le traitement est effectué sous pression de vapeur d'eau à une température de l'ordre de 120°C pendant au moins une heure.

A la fin de ce traitement, les fibres de variété "α" obtenues, sont séparées, nécessairement séchées (à environ 400°C) et éventuellement calcinées (à environ 600°C) pour les stabiliser.

Mais si la vocation de ce premier type de procédé est essentiellement l'obtention de sulfate de calcium semihydraté de variété "α", les structures cristallines longilignes obtenues ont des caractéristiques dimensionnelles peu complémentaires entre elles et ne peuvent conserver leur caractère fibreux en présence d'eau qu'au prix d'une calcination coûteuse ou bien d'un revêtement protecteur qui n'est jamais totalement étanche, les rendant moins sensibles au phénomène de réhydratation.

La sanction d'une mauvaise stabilisation thermique ou d'une protection incomplète par revêtement est la réhydratation de ces fibres et la destruction de leur forme longiligne.

Un deuxième type de procédé, à l'inverse du premier, propose d'utiliser comme matière première, non pas du gypse mais du sulfate de calcium semihydraté. Ce semihydrate mis en solution dans un milieu aqueux acide volontairement exempt de germes cristallins est transformé en fibres de sulfate de calcium dihydraté jouissant de caractéristiques dimensionnelles, longueur et facteur de forme assez réguliers, grâce au refroidissement lent de ladite solution jusqu'à lui faire atteindre, mais sans aller au-delà, la concentration de saturation permettant d'initier la cristallisation.

Un procédé discontinu relevant de ce deuxième type est décrit dans le brevet français FR 2,377,970 qui propose la préparation en un milieu acide de monocristaux (whiskers) de sulfate de calcium hydraté disposant d'un facteur de forme et dont longueurs et diamètres ne leur confèrent pas un effet de complémentarité dimensionnelle suffisant entre eux.

Ce procédé consiste à mettre en oeuvre une solution aqueuse acide (pH < 4) de sulfate de calcium, portée à une température comprise entre 75°C et 100°C et débarrassée de tout germe cristallin. Puis ladite solution chaude est lentement refroidie en un temps supérieur à 70 minutes, à une température comprise entre 65°C et 40°C jusqu'à atteindre la concentration de saturation. Dès lors que cette concentration est atteinte, le refroidissement est poursuivi jusqu'à l'obtention des monocristaux aciculaires

3

de sulfate de calcium dihydraté qui sont séparés et séchés selon les méthodes connues.

Un tel procédé, quand il est mis en oeuvre, exige un savoir-faire important qui rend son exploitation critique, faisant douter de son caractère industriel. En effet non seulement la solution acide et chaude de sulfate de calcium doit être exempte de tout germe cristallin , mais encore ladite solution doit être refroidie d'une manière telle qu'elle ne soit jamais placée dans un état de sursaturation qui occasionnerait l'apparition perturbante d'agrégats polycristallins (en forme d'étoiles) ou de cristaux (en forme d'écailles), en même temps que celle des monocristaux aciculaires souhaités.

Enfin un troisième type de procédé se distingue de ceux précités par le fait essentiel qu'il transforme d'une manière isothermique la matière initiale (sulfate de calcium) en fibres de sulfate de calcium dihydraté, dotées d'un facteur de forme mais dont longueur et diamètre ne leur octroient pas une complémentarité dimensionnelle suffisante entre elles.

Un procédé de ce type, décrit dans le brevet français FR 2,395,965 prépare des fibres minérales ayant une longueur d'au moins 200 micromètres en transformant du sulfate de calcium dans des solutions aqueuses acides ou salines, de manière isothermique, à une température préférentiellement choisie autour de 100°C en présence d'une phase solide, les fibres obtenues disposant d'un facteur de forme mais leur longueur et leur diamètre ne permettant pas une complémentarité dimensionnelle suffisante entre elles.

Quand le procédé est préférentiellement pratiqué en un milieu salin, les solutions salines mises en oeuvre (mais préalablement préparées) sont très concentrées, leur concentration pouvant atteindre des valeurs aussi élevées que 30 pour cent en poids. De telles concentrations peuvent rendre rédhibitoire l'exploitation industrielle dudit procédé.

De plus, qu'il soit pratiqué en un milieu acide et/ou salin, ce procédé peut être à l'origine de graves phénomènes de corrosion, qui nécessitent pour les combattre des installations complexes et beaucoup plus coûteuses.

En outre, ce procédé présente l'inconvénient majeur de nécessiter un niveau de température élevé, et malgré cela, des temps de préparation des fibres qui sont longs, se situant pratiquement entre 2 heures et au mieux 10 minutes. Car à partir d'une solution réactionnelle ayant une concentration en sulfate de calcium comprise entre 5 et 50 pour cent en poids, la formation des fibres de sulfate de calcium dihydraté se produit (isothermiquement) entre 90°C et 100°C en un temps compris entre plusieurs heures et 30 minutes, tandis que la formation des fibres de sulfate de calcium anhydre, s'effectue (isothermiquement) entre 100°C et 105°C en un temps compris entre plusieurs heures et 10 minutes. En deçà de la température de 90°C, l'allongement du temps nécessaire à la formation des fibres est tel qu'il est incompatible avec un procédé industriel.

Enfin ce procédé manifeste, selon les conditions choisies pour son exécution, des rendements réactionnels qui sont très faibles (par exemple de l'ordre de 24 pour cent).

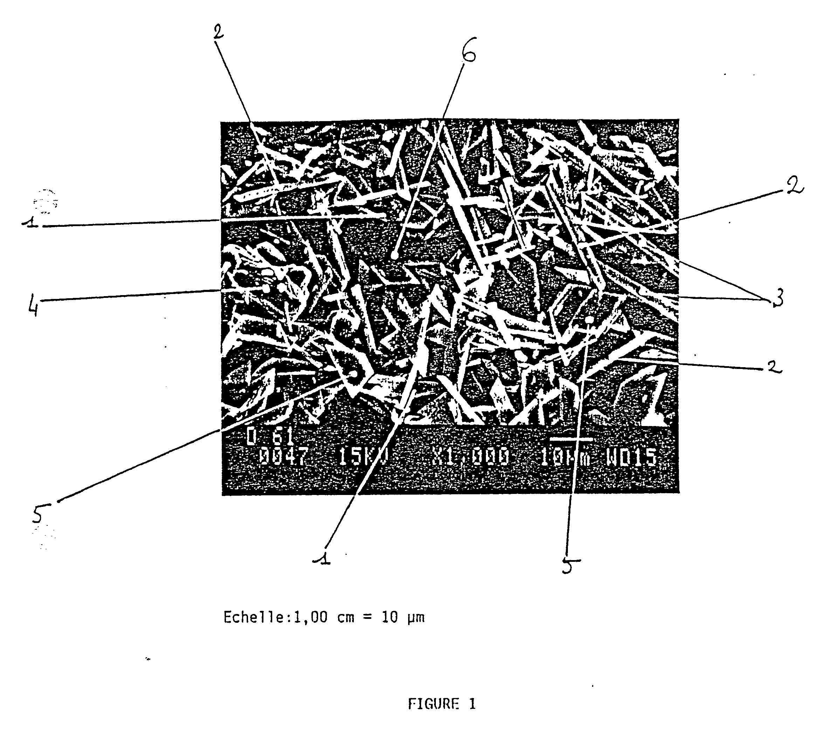

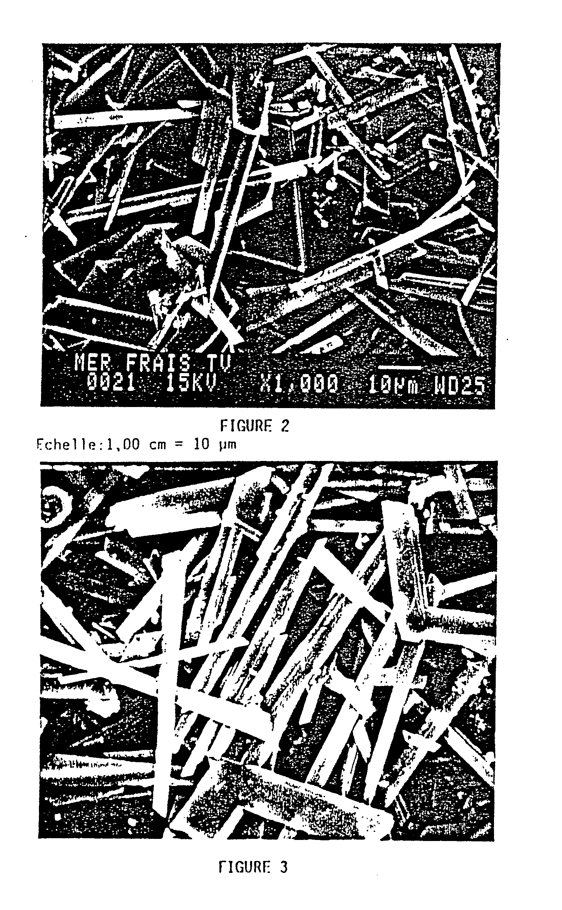

Un autre procédé relevant de ce troisième type, décrit dans la demande internationale PCT/US 88.00141 préconise la préparation, dans un intervalle de concentration étroit (20 pour cent à 25 pour cent en poids) ne pouvant pas dépasser 25 pour cent en poids (en raison du risque d'évolution du faciès cristallin), de cristaux de gypse ayant des dimensions, après une classification, de 100 micromètres à 450 micromètres, en transformant d'une manière quasi isothermique du sulfate de calcium semihydraté dans des milieux aqueux acides soumis à agitation, à une température préférentiellement choisie entre 50°C et 60°C, en présence d'un agent de cristallisation tel que l'alun. Mais un tel procédé conduit à une simple hydratation du sulfate de calcium semihydraté, qui occasionne la production de cristaux de sulfate de calcium dihydraté à longueur et à facteur de forme mal maîtrisés tel que cela apparait dans les Figures 1 et 2 de ladite demande internationale de brevet

Ainsi, bien que l'art antérieur ait préconisé, à travers la littérature spécialisée, des moyens à utiliser pour préparer à partir de sulfate de calcium des fibres minérales disposant d'un facteur de forme, ces moyens se sont souvent révélés d'application difficile à l'échelle industrielle. Car les uns, par la mise en oeuvre des procédés actuels se manifestent comme étant grands consommateurs d'énergie thermique (procédé du type 1), et par là même coûteux quand la formation des fibres s'effectue dans un milieu sous pression ; d'autres bien difficiles à exploiter car exigeant des conditions souvent critiques (procédé du type 2) ; et les derniers (procédé du type 3) étant non seulement assez fréquemment consommateurs d'énergie thermique mais aussi de temps, et conduisant assez souvent à de mauvais rendements hydroréactionnels, ou encore à une mauvaise maîtrise de la longueur et du facteur de forme des cristaux obtenus.

Enfin, les structures cristallines longilignes générées par l'un ou l'autre des moyens décrits, disposent de caractéristiques dimensionnelles (longueur et diamètre) insuffisamment complémentaires entre elles pour permettre l'obtention de matériaux chargés disposant, in fine, d'une compacité maximale.

## SOMMAIRE DE L'INVENTION

L'invention a pour but d'éliminer les inconvénients précités et de créer un procédé de préparation de sulfate de calcium dihydraté exclusivement sous forme de structures cristallines longilignes consommant peu d'énergie et de temps et se développant en un milieu aqueux non-acide.

L'invention a également pour but, selon le procédé, de conférer aux structures cristallines longilignes des caractéristiques dimensionnelles, telles que longueur et facteur de forme, distribuées d'une manière contrôlée et maîtrisée selon un modèle proche du modèle gaussien de probabilité, en vue de donner aux matériaux les contenant comme charge, une compacité maximale.

Le procédé, selon l'invention, de préparation desdites structures cristallines longilignes à partir de sulfate de calcium semihydraté de variété "β" et/ou "α" se caractérise en ce que dans le but de les doter de caractéristiques dimensionnelles -longueur et facteur de forme-distribuées d'une manière contrôlée et maîtrisée selon un modèle proche du modèle gaussien de probabilité, il comprend :

a) l'emploi comme matière première de sulfate de calcium semihydraté prélevé à la sortie de la zone de transformation thermique du gypse en semihydrate,

b) la présence d'au moins un agent régulateur de recristallisation, à raison de 0,01 à 6,66 pour cent en poids, par rapport à la masse totale de la suspension à former dans l'étape <c>,

c) la formation par dispersion à partir des étapes <a> et <b> d'une suspension aqueuse à une température de transformation isothermique fixée au plus égale à 60° C, ayant une teneur en matière sèche d'au plus 33,33 pour cent en poids par rapport à la masse totale de la suspension,

d) le maintien de la température à la valeur fixée pendant un temps d'au plus 60 minutes et,

e) éventuellement la séparation des structures cristallines longilignes à longueur et à facteur de forme maîtrisés selon un modèle proche du modèle gaussien de probabilité.


## DESCRIPTION DETAILLEE DE L'INVENTION

Ainsi, le procédé selon l'invention se distingue de ceux décrits dans l'art antérieur, par le fait qu'il met en oeuvre une source de sulfate de calcium semihydraté, que la transformation isothermique s'effectue en milieu aqueux non acide, en présence d'au moins un agent régulateur de la recristallisation, et qu'enfin, la température de transformation isothermique est toujours inférieure à celles antérieurement énoncées.

Selon le procédé de l'invention, la source de matière première à mettre en oeuvre est constituée de sulfate de calcium semihydraté "β" et/ou "α", résultant du traitement thermique de gypses naturels ou synthétiques tels que phosphogypses, désulfogypses ou gypses provenant de neutralisations chimiques par les moyens connus de l'homme de l'art, ledit sulfate de calcium semihydraté étant prélevé à la sortie de la zone de transformation thermique du gypse, c'est-à-dire immédiatement après l'opération de cuisson.

En général les particules de sulfate de calcium semihydraté prélevées immédiatement après l'opération de cuisson du gypse sont souhaitablement choisies d'une manière telle que leur coupe granulométrique soit au plus de 10 000 micromètres, préférentiellement au plus de 5 000 micromètres et très préférentiellement au plus de 1 500 micromètres.

Comme cela est bien connu de l'homme de l'art, les coupes granulométriques précitées du sulfate de calcium semihydraté sont habituellement acquises soit par une action mécanique sur le gypse avant et/ou pendant sa transformation thermique, soit encore sur le sulfate de calcium semihydraté par élimination des particules par trop grossières.

De plus, les particules de sulfate de calcium semihydraté constituant la source de matière première peuvent être mises en oeuvre dans le procédé de l'invention immédiatement après l'opération de cuisson ou bien après refroidissement plus ou moins important. Ainsi, lors de sa mise en oeuvre, la source de matière première peut se trouver à une température choisie dans le domaine délimité par les bornes 150° C et 20° C.

Dans le cas où la source de matière première est constituée par du sulfate de calcium semihydraté "β", il se produit lors de la formation par dispersion de la suspension aqueuse de l'étape <c> du procédé selon l'invention, un traitement hydroréactionnel qui se manifeste par l'éclatement des particules introduites dans le milieu aqueux en donnant une coupe granulométrique supérieure à 200 micromètres mais très inférieure à la coupe granulométrique initiale précitée et préférentiellement comprise entre 200 micromètres et 1 500 micromètres.

Dans le cas où la source de matière première est constituée par du sulfate de calcium semihydraté "α", le phénomène hydroréactionnel ne se produit pas lors de la formation par dispersion de la suspension aqueuse de l'étape <c>. Pour cette raison, la source de matière première constituée par le sulfate de calcium semihydraté de variété " " est en général soumise à un traitement d'affinage pour lui octroyer une réactivité équivalente à celle acquise par le sulfate de calcium semihydraté de variété "β" lors du traitement hydroréactionnel.

Le traitement du sulfate de calcium semihydraté de variété "α" peut consister en un affinage par voie sèche ou par voie humide en un milieu aqueux chaud, à une température d'au moins 70° C et préférentiellement comprise entre 80° C et 100° C dans le cas du milieu aqueux.

Dans le cas où la source de matière première est constituée par du sulfate de calcium semihydraté de variété "β" fortement ou complètement éventé, son comportement à l'égard du traitement hydroréactionnel est le même que celui du sulfate de calcium semihydraté de variété "α". De ce fait, il est souhaitable de lui faire subir un traitement d'affinage.

Dès lors, les particules de sulfate de calcium semihydraté peuvent être mises en oeuvre selon le procédé de l'invention dès la sortie de la zone de transformation thermique du gypse, d'une manière immédiate ou bien après un temps de repos plus ou moins prolongé provoquant un refroidissement et/ou un éventement contrôlés desdites particules intervenant dans la maîtrise de l'amorce de la cristallisation.

De plus, selon le choix qui est fait de la coupe granulométrique du sulfate de calcium semihydraté constituant la source de matière première, les structures cristallines longilignes résultant de la transformation isothermique selon l'invention disposent de caractéristiques dimensionnelles évoluant dans le même sens que celles du sulfate de calcium semihydraté dans le milieu hydroréactionnel, toutes les autres conditions du procédé selon l'invention étant maintenues constantes, c'est-à-dire dans leurs valeurs initiales.

En d'autres termes, les caractéristiques dimensionnelles des structures cristallines longilignes de sulfate de calcium dihydraté, résultant du procédé selon l'invention, sont en état de corrélation avec celles du sulfate de calcium semihydraté mis en oeuvre dans le milieu hydroréactionnel.

Le procédé selon l'invention comporte également la présence d'au moins un agent régulateur de recristallisation ayant la propriété d'intervenir sur le mécanisme de formation des structures cristallines longilignes et dès lors sur leur longueur et leur facteur de forme. L'agent régulateur de cette recristallisation peut être choisi parmi les adjuvants n'ayant pas ou peu d'influence sur le pH de la suspension aqueuse de sulfate de calcium semihydraté, en raison de leur caractère chimiquement neutre ou bien ayant une influence sur ledit pH à cause de leur caractère franchement alcalin.

Quand il est souhaitable que l'agent régulateur de recristallisation ait un caractère chimiquement neutre, pour favoriser préférentiellement la formation de structures cristallines longilignes de petites dimensions, il est généralement choisi dans le groupe constitué par les sels des métaux monovalents ou polyvalents, et préférentiellement parmi les halogénures, les sulfates, les nitrates, les silicates, les halogénosilicates de lithium, de sodium, de potassium, d'ammonium, de calcium, de magnésium, d'aluminium, seuls ou en combinaison.

Mais quand il est souhaitable que l'agent régulateur de recristallisation ait un caractère chimiquement alcalin pour favoriser préférentiellement la formation de structures cristallines longilignes de plus grandes dimensions, il est généralement choisi dans le groupe constitué par les hydroxydes alcalins, l'hydroxyde d'ammonium, les hydroxydes alcalino-terreux, les hydroxydes de magnésium ou de calcium, par les ciments PORTLAND, les ciments alumineux, les aluminates alcalins, les aluminosilicates, seuls ou en combinaison.

Dans certains cas, il peut être souhaitable , voire préférable, d'associer au moins deux agents régulateurs de recristallisation provenant de l'un et/ou l'autre groupes précités dans le but de maîtriser mieux encore les dimensions des structures cristallines longilignes en cours de formation, et de jouer ainsi sur leur longueur et sur leur facteur de forme.

Dans d'autres cas, il peut être souhaitable dans le cadre de l'invention, d'introduire dans le milieu réactionnel le sulfate de calcium précité, sous la forme dihydratée, finement broyé et/ou sélectionné et non éventé (ou non vieilli) ou encore sous la forme de structures cristallines longilignes obtenues selon l'invention, éventuellement broyées et/ou sélectionnées, comme amorce de germination, d'une manière simultanée ou indépendante des autres types d'agents régulateurs de recristallisation.

La nature de l'eau intervenant en tant que phase liquide dans la formation de la suspension aqueuse peut avoir une certaine importance quant à la maîtrise du procédé de préparation des structures cristallines longilignes. C'est pourquoi, il peut être souhaitable d'utiliser de l'eau distillée ou déminéralisée bien que toute eau disponible puisse être mise en oeuvre sans que des changements importants interviennent dans les réglages des autres paramètres du procédé.

Lors de la mise en oeuvre du procédé selon l'invention pour l'obtention des structures cristallines longilignes, une suspension aqueuse de sulfate de calcium semihydraté est en général préparée par dispersion d'une phase solide pulvérulente formée en tout ou partie par ledit sulfate de calcium se trouvant

EP 0 378 837 A1

à une température proche de l'ambiante et au plus égale à la température de transformation isothermique fixée à l'avance selon l'étape <c> du procédé de l'invention, dans une phase liquide aqueuse portée à une température telle que la suspension de sulfate de calcium semihydraté ainsi formée soit à la température de transformation fixée à l'avance, et au plus égale à 60°C.

Toutefois, dans certains cas particuliers, il peut être intéressant de préparer ladite suspension aqueuse par dispersion dans la phase liquide de la phase solide pulvérulente se trouvant à une température supérieure à la température de transformation isothermique fixée selon l'étape <c> du procédé de l'invention et au plus égale à 150°C et à une température telle que la suspension de sulfate de calcium semihydraté ainsi formée soit à la température de transformation isothermique fixée à l'avance et au plus égale à 60°C.

Au cours de sa formation, la suspension aqueuse de sulfate de calcium semihydraté est soumise à une agitation suffisante pour éviter la sédimentation, maîtriser la coupe granulométrique et favoriser la dissolution dudit sulfate puis faciliter l'élaboration des structures cristallines longilignes selon l'invention.

La phase solide pulvérulente précédemment évoquée, quand elle est constituée en partie par le sulfate de calcium semihydraté à la dimension choisie, est formée du mélange physique dudit sulfate avec l'(es) agent(s) régulateur(s) de recristallisation.

La phase solide est alors introduite dans la phase liquide soumise à agitation pour y être dispersée et former une suspension aqueuse, ladite phase liquide se trouvant dans une enceinte appropriée munie des moyens d'agitation et de régulation nécessaires pour la porter à la température souhaitée et maintenir la suspension formée à ladite température tout au long de la réaction hydrothermique.

D'autres agents, aux fonctions diverses et connues de l'homme de l'art, peuvent également être introduits dans la suspension au moment le mieux choisi, tels que par exemple des agents dispersants ayant la propriété d'éviter l'agglomération des structures cristallines longilignes en cours de formation et de favoriser leur développement régulier.

La composition de la suspension aqueuse ainsi formée exprimée en pour cent en poids de la masse totale, comporte :

a) de 0,85 à au plus 33,33 pour cent en poids, de préférence de 2,5 à 17 pour cent en poids, mais très préférentiellement de 4,0 à 11,0 pour cent en poids de sulfate de calcium semihydraté.

b) de 0,01 à 6,66 pour cent en poids, et de préférence de 0,02 à 2,5 pour cent en poids de l'agent régulateur de recristallisation.

c) de 0 à 3,33 pour cent en poids et préférentiellement de 0 à 0,85 pour cent en poids d'agents divers connus.

d) de 98,75 à au moins 66,66 pour cent en poids de la phase aqueuse.

Le rapport pondéral entre la phase liquide et la phase solide doit se situer de manière intéressante dans l'intervalle de 2 à 80, mais de préférence dans l'intervalle de 5 à 30, et très souhaitablement dans l'intervalle de 8 à 20.

L'(es) agent(s) régulateur(s) de recristallisation, comme cela a déjà été dit, est préférentiellement introduit dans la suspension sous la forme d'un mélange solide avec le sulfate de calcium semihydraté, la quantité dudit agent pouvant varier de 0,2 à 20 pour cent en poids dudit mélange solide.

Toutefois, dans certains cas, il peut être préférable de mettre en oeuvre l'agent régulateur de recristallisation sous une forme solubilisée dans la phase aqueuse ou de l'introduire sous forme d'une solution aqueuse quand le mécanisme d'action dudit agent nécessite son passage en solution.

De même, dans le cas où des agents aux fonctions diverses et connues, sont mis en oeuvre, ils peuvent être introduits dans le mélange solide précité ou dans la phase aqueuse selon une quantité qui peut atteindre au plus 10 pour cent en poids du mélange solide.

La suspension est généralement portée à une température de transformation isothermique qui ne peut pas dépasser 60°C et qui est choisie dans l'intervalle large de 5°C à 55°C et de préférence dans l'intervalle plus étroit de 20°C à 50°C.

Selon les caractéristiques dimensionnelles des structures cristallines longilignes souhaitées, la température de transformation isothermique est généralement choisie dans les basses valeurs de l'intervalle précité pour favoriser la formation de petites structures cristallines longilignes, tandis que cette température est généralement choisie dans les hautes valeurs dudit intervalle pour favoriser la formation de grandes structures cristallines longilignes, ladite température étant choisie entre ces extrêmes pour favoriser la formation de structures cristallines longilignes de longueurs intermédiaires.

La suspension de sulfate de calcium semihydraté et de l'agent régulateur de recristallisation ainsi formée, est maintenue sous agitation et à la température choisie, pendant le temps nécessaire à la formation et à la maturation hydroréactionnelles des structures cristallines longilignes selon l'invention, ce temps n'excédant pas 60 minutes, étant généralement choisi inférieur à 45 minutes et préférentiellement

7

fixé en marche industrielle entre 30 minutes et 3 minutes.

En pratique la température de traitement est choisie dans le domaine précité d'une manière telle que la transformation hydroréactionnelle du sulfate de calcium semihydraté broyé et/ou sélectionné en la structure cristalline longiligne de sulfate de calcium dihydraté, se fasse à une température minimum de formation et dans un temps souhaitablement le plus bref possible.

Dès lors et contrairement aux enseignements de l'art antérieur préconisant des milieux hydroréactionnels acides et/ou salins et des températures élevées (90°C à 100°C) pour disposer d'une cinétique rapide et d'un temps réactionnel raisonnable (au mieux entre 10 minutes et 30 minutes), s'est révélée de manière inattendue la possibilité de former des structures cristallines longilignes dont les caractéristiques de longueur et de facteur de forme sont distribuées d'une manière contrôlée et maîtrisée selon un modèle proche du modèle gaussien de probabilité, grâce à l'usage d'un milieu hydroréactionnel évoluant d'un pH neutre vers un pH alcalin, maintenu à une température constante et réputée basse, et ce avec un excellent rendement malgré un temps de réaction très court. Dès lors la formation desdites structures s'effectue par l'intermédiaire de la phase dissoute du sulfate de calcium semihydraté présent dans la suspension, ledit sulfate ne passant en solution qu'au fur et à mesure qu'apparaissent les structures cristallines longilignes selon l'invention.

Au terme de la transformation hydroréactionnelle, les structures cristallines longilignes de sulfate de calcium dihydraté sont obtenues avec un excellent rendement de transformation, voisin de cent pour cent, du sulfate de calcium semihydraté mis en oeuvre.

La phase solide cristallisée ainsi obtenue peut être maintenue en suspension aqueuse sans nul dommage pour les structures cristallines selon l'invention, ou bien être séparée de ladite suspension.

Quand la phase solide cristallisée ainsi obtenue n'est pas séparée de la phase aqueuse au terme de la transformation hydroréactionnelle, la suspension aqueuse desdites structures cristallines longilignes selon l'invention peut être mise industriellement en oeuvre telle qu'elle est ou faire l'objet, avant cette mise en oeuvre, d'une correction de sa teneur en matière sèche, par dilution ou par concentration. Dans ce dernier cas, l'augmentation de la teneur en matière sèche de ladite suspension peut se réaliser par tout moyen connu tel que évaporation, décantation, électro-concentration, ou autres.

Quand la phase solide cristallisée ainsi obtenue est séparée de la phase liquide, éventuellement chaude, cette séparation peut s'effectuer par tout moyen connu tel que décantation, filtration sous pression ou sous vide, hydrocyclonage, électrophorèse, centrifugation... ; puis elle est séchée selon l'un quelconque des procédés connus de l'homme de l'art.

La phase aqueuse obtenue lors de la séparation liquide-solide peut être recyclée à l'étape de la formation de la suspension aqueuse de sulfate de calcium semihydraté, en y ajoutant la quantité d'eau nécessaire pour combler les pertes lors de la séparation et en effectuant par ajouts les corrections de concentrations pour les divers agents intervenant ou non dans le procédé selon l'invention.

La phase solide recueillie après l'étape de séchage est formée des structures cristallines longilignes, bien individualisées et dotées de caractéristiques dimensionnelles -longueur et facteur de forme- distribuées d'une manière contrôlée et maîtrisée selon un modèle proche du modèle gaussien de probabilité. Ces structures cristallines longilignes ne nécessitent ni stabilisation thermique, ni revêtement, comme le préconise l'art connu, et mises en présence d'eau saturée en sulfate de calcium elles conservent toutes leurs caractéristiques et en particulier leur longueur et leur facteur de forme.

Les structures cristallines longilignes produites conformément au procédé selon l'invention se composent de cristaux individualisés ou associés au plus trois à trois selon leur grand axe par recouvrement partiel. Lesdites structures disposent selon la demande, d'une longueur moyenne comprise entre 2 micromètres et 200 micromètres, d'une dispersion des longueurs selon un modèle proche du ·modèle gaussien de probabilité et d'un facteur de forme (rapport de la longueur moyenne au plus grand diamètre apparent moyen), qui peut varier dans le domaine 3/1 à 50/1.

Les structures cristallines longilignes de sulfate de calcium dihydraté peuvent être transformées thermiquement si cela s'avère souhaitable pour certains emplois, en structures cristallines longilignes de sulfate de calcium semihydraté quand le traitement thermique est pratiqué à une température comprise entre 90°C et 250°C, ou encore d'anhydrites insolubles quand le traitement thermique dépasse la température de 250°C (anhydrite II ou surcuit ) ou de 1 200°C (anhydrite I), lesdites structures cristallines longilignes conservant au terme du traitement thermique toutes les caractéristiques dimensionnelles et en particulier leur longueur et leur facteur de forme, détenus par les structures dihydratées avant le traitement thermique.

Les ·structures cristallines longilignes selon l'invention, peuvent être utilisées dans de nombreux domaines industriels dès lors que leur longueur et leur facteur de forme les autorisent à jouer, par exemple, un rôle de renfort dans certains matériaux ou un rôle de charge dans d'autres matériaux pour en améliorer les caractéristiques mécaniques, optiques, thermiques, d'aspect de surface ou autres ou encore leur octroyer une compacité maximale.

Ainsi les structures cristallines longilignes selon l'invention, parce qu'elles disposent de qualités aussi diverses que légèreté, blancheur, opacité, brillant, facilité de dispersion, sont destinées plus spécialement à des domaines d'application aussi divers que ceux du papier, de la peinture et des matières plastiques. L'intérêt et la portée de l'invention seront mieux compris grâce aux exemples qui l'illustrent et qui la comparent à l'art connu.

**EXEMPLE 1** (illustré par la Figure 1)

Cet exemple qui illustre l'art antérieur concerne la préparation de structures cristallines ayant un facteur de forme anarchique quand l'une au moins des conditions selon l'invention n'est pas réalisée.

Dans cet esprit, plusieurs expérimentations (numéros 1.1 et 1.2) ont été conduites, utilisant comme source de matière première du sulfate de calcium semihydraté non adjuvanté (de coupe granulométrique 5 000 micromètres) résultant du traitement thermique de gypse naturel et prélevé à la sortie d'un four Beau.

Pour l'expérimentation 1.1, la matière première avait été refroidie jusqu'à la température ambiante, tandis que pour l'expérimentation 1.2, la matière première était à la température de 98°C au moment de son utilisation.

Toutes les expérimentations concernent la formation de suspensions aqueuses (dans de l'eau distillée) dudit sulfate de calcium semihydraté, selon des concentrations données variables, à la température de transformation isothermique de 45°C pour chacune d'entre elles, lesdites suspensions formées étant exemptes d'agent régulateur de recristallisation.

Toutes les expérimentations ont été réalisées selon les mêmes critères expérimentaux, en dehors de ceux précités, et dans le même appareillage afin que les résultats obtenus soient comparables.

Pour chaque expérimentation, la suspension aqueuse de sulfate de calcium semihydraté a été préparée par introduction de la phase solide portée à une température telle que le traitement et la transformation hydroréactionnels s'effectuent à 45°C dans la phase liquide contenue dans une cuve de 1 300 litres munie d'un moyen d'agitation (ayant une vitesse circonférentielle variable de 10 mètres à 20 mètres par seconde) et des moyens d'échanges thermiques appropriés permettant de maintenir d'abord la phase aqueuse seule puis la suspension formée, à la température de transformation hydroréactionnelle choisie.

Le temps de recristallisation mesuré correspondait à la transformation quasi complète du sulfate de calcium semihydraté en sulfate de calcium dihydraté.

Les structures cristallines obtenues dans le cadre de chaque expérimentation, séparées de la phase aqueuse puis séchées, ont été soumises à une observation au microscope électronique à balayage (grossissement 1 000). Les caractéristiques et les résultats propres à chaque expérimentation ont été regroupés dans le Tableau A, tandis que les structures cristallines obtenues selon l'une des expérimentations appartenant à l'art antérieur (expérimentation 1.1) font l'objet de la Figure 1.

TABLEAU A

| Expéri-mentati-on | Granulométrie avant traitement hydroréactionnel | | Granulométrie après traitement hydroréactionnel | | Agent régulateur de recristallisation | | Suspension aqueuse de Ca SO4, 1/2 H2O | | | Structures cristallinés longilignes | | |
|---|---|---|---|---|---|---|---|---|---|---|---|---|
| | Coupe en micromètres | ** D50 en micromètres | Coupe en micromètres | D50 en micromètres | Type | Concentration en % en poids de la suspension | Concentration en % en poids | Température de transformation isothermique en °C | Temps de recristallisation en mn | Longueur en micromètres | Diamètré en micromètres | Facteur de Forme |
| 1.1 | 5 000 | 107 | 1 500 | 8 | - | 0 | 9,09 | 45 | 45 | mâcles | | mauvais |
| * 1.2 | 5 000 | 107 | 4 500 | 98 | - | 0 | 9,09 | 45 | 60 | mâcles + plaques | | mauvais |

* 1.2 = plâtre chaud (98°C)
** D50 = diamètre statistique médian

EP 0 378 837 A1

Les structures cristallines obtenues dans le cadre de chaque expérimentation se révèlent être, à l'observation microscopique, un fouillis de mâcles et/ou d'agglomérats de multiples dimensions comportant quelques aiguilles et donnant au facteur de forme un caractère anarchique (cristallisation désordonnée).

D'après la Figure 1 qui illustre l'art connu, et qui concerne l'observation photographique au microscope électronique à balayage des structures cristallines obtenues sous les conditions décrites pour l'expérimentation 1.1, le caractère anarchique desdites structures est patent dans la zone observée puisque par exemple sont visibles, un petit nombre d'aiguilles (1) de très petite longueur et de très faible diamètre, quelques aiguilles (2) de plus grande longueur, des aiguilles (3) de longueur substantielle et de diamètre plus important, des agglomérats (4), des mâcles (5) ainsi que des "fers de lance" (6).

**EXEMPLE 2** (illustré par les Figures 2 et 3)

Cet exemple est une illustration de l'influence des caractéristiques dimensionnelles des particules de sulfate de calcium semihydraté constituant la source de matière première sur celles des structures cristallines longilignes formées selon le procédé de l'invention.

En pratique, du sulfate de calcium semihydraté, à température ambiante, résultant du traitement thermique du gypse en four Beau est mis en oeuvre de telle manière que les particules disposent dans le cadre des six expérimentations suivantes, de granulométries bien définies par les coupes :

2.1 : coupe granulométrique du Ca SO4,1/2 H2O sortie four Beau avant traitement hydroréactionnel : 5 000 micromètres

2.2 : coupe granulométrique du Ca SO4,1/2 H2O sortie four Beau après affinage et avant traitement hydroréactionnel : 800 micromètres

2.3 : coupe granulométrique du Ca SO4, 1/2 H2O sortie four Beau après affinage et avant traitement hydroréactionnel : 400 micromètres

2.4 : coupe granulométrique du Ca SO4,1/2 H2O sortie four Beau, éventé pendant 24 heures à 85 pour cent d'humidité relative, avant traitement hydroréactionnel : 5 000 micromètres

2.5 : coupe granulométrique du Ca SO4,1/2 H2O sortie four Beau, éventé pendant 6 mois à l'humidité relative ambiante, après affinage et avant traitement hydroréactionnel : 1 500 micromètres

2.6 : coupe granulométrique du Ca SO4,1/2 H2O sortie four Beau, éventé pendant 24 heures à 85 pour cent d'humidité relative, après affinage et avant traitement hydroréactionnel : 800 micromètres

Les diverses opérations d'affinage ont été réalisées dans les mêmes conditions afin que les résultats soient comparables.

L'appareil utilisé pour l'affinage était un broyeur à marteaux du type FORPLEX N° 00 (commercialisé par la société FORPLEX).

Avant la formation de la suspension, le sulfate de calcium semihydraté a été adjuvanté par un agent régulateur de recristallisation (ciment PORTLAND CPA 45 commercialisé par CIMENTS LAFARGE) à raison de 5,26 pour cent en poids par rapport au sulfate de calcium semihydraté, soit 0,45 pour cent en poids par rapport à la masse totale de la suspension, le mélange constituant la phase solide pulvérulente destinée à être introduite dans la phase liquide préalablement chauffée.

La phase solide a ensuite été introduite dans une cuve de cristallisation munie de moyens d'agitation et de réglage de la température de la phase liquide qu'elle contenait préalablement pour y subir la transformation hydroréactionnelle. La phase liquide constituée par de l'eau distillée était maintenue à la température de transformation isothermique fixée à 45° C. Au cours de la transformation hydroréactionnelle, la suspension aqueuse chaude de sulfate de calcium semihydraté était maintenue sous une agitation suffisante pour éviter la sédimentation, maîtriser la coupe granulométrique dans le milieu hydroréactionnel et favoriser la dissolution dudit sulfate puis faciliter l'élaboration des structures cristallines longilignes.

La composition de la suspension aqueuse pour chaque expérimentation était la suivante exprimée en pour cent en poids :
. Sulfate de calcium semihydraté : 8,64
. Agent régulateur de recristallisation : 0,45
. Eau distillée : 90,91

La suspension ainsi formée a été maintenue sous agitation et à la température de 45° C pendant le temps de recristallisation du sulfate de calcium dihydraté qui s'est élevé à 30 minutes.

Deux minutes après l'introduction de la phase solide et tout au long de la transformation isothermique dudit semihydrate, le pH de la suspension était de 11,5.

A l'issue de la transformation isothermique, les structures cristallines longilignes ont été recueillies par filtration de la phase aqueuse puis elles ont été séchées à une température d'environ 45°C et soumises à une observation microscopique au moyen d'un microscope électronique à balayage (grossissement 1 000) en vue de déterminer leurs longueur, diamètre et facteur de forme.

Les résultats propres à chaque expérimentation et les caractéristiques des structures cristallines longilignes obtenues ont été regroupés dans le Tableau B ci-après.

TABLEAU B

| Expéri-mentati-on | Granulométrie avant traitement hydroréactionnel | | Granulométrie après traitement hydroréactionnel | | Agent régulateur de recristallisation | | Suspension aqueuse de Ca SO4, 1/2 H2O | | | Structures cristallines longilignes | | |
|---|---|---|---|---|---|---|---|---|---|---|---|---|
| | | | | | | | | | | | Valeurs extrêmes | |
| | Coupe en micromètres | ** D50 en micromètres | Coupe en micromètres | D50 en micromètres | Type | Concentration en % en poids de la suspension | Concentration en % en poids | Température de transformati-on isothermique en $^\circ$C | Temps de recrista-llisation en mn | Longueur en micromètres | Diamètre en micromètres | Facteur de Forme |
| 2.1 | 5 000 | 107 | 1 500 | 8 | CPA 45 | 0,45 | 8,64 | 45 | 30 | 20 - 60 | 5 - 4 | 5 - 15 |
| 2.2 | 800 | 88 | 630 | 13 | CPA 45 | 0,45 | 8,64 | 45 | 30 | 30 - 80 | 6 - 2 | 5 - 40 |
| 2.3 | 400 | 58 | 400 | 14 | CPA 45 | 0,45 | 8,64 | 45 | 30 | 20 - 60 | 6 - 2 | 3 - 30 |
| 2.4 | * 5 000 | 107 | 1 500 | 57 | CPA 45 | 0,45 | 8,64 | 45 | 30 | 40 - 90 | 10 - 8 | 4 - 11 |
| 2.5 | * 1 500 | 104 | 1 500 | 48 | CPA 45 | 0,45 | 8,64 | 45 | 30 | 30 - 60 | 4 - 2 | 7 - 30 |
| 2.6 | * 800 | 88 | 800 | 52 | CPA 45 | 0,45 | 8,64 | 45 | 30 | 30 - 80 | 2 - 6 | 15 - 13 |

*2.4, 2.5, 2.6 = SH éventé

** D50 = diamètre statistique médian

EP 0 378 837 A1

Les structures cristallines longilignes obtenues dans le cadre de chaque expérimentation révèlent, à l'observation microscopique, l'existence d'aiguilles bien individualisées dont les caractéristiques dimensionnelles -longueur et facteur de forme- sont statistiquement bien distribuées d'une manière contrôlée et maîtrisée selon un modèle proche du modèle gaussien de probabilité.

Les Figures 2 et 3 qui illustrent l'invention sont les observations photographiques au microscope électronique à balayage, grossissement 1 000, des structures cristallines obtenues dans les conditions des expérimentations 2.1 (Figure 2) et 2.4 (Figure 3). La comparaison des Figures 3, 2 et 1 révèle le caractère maîtrisé du procédé selon l'invention à côté de l'anarchie provoquée par un procédé de l'art antérieur.

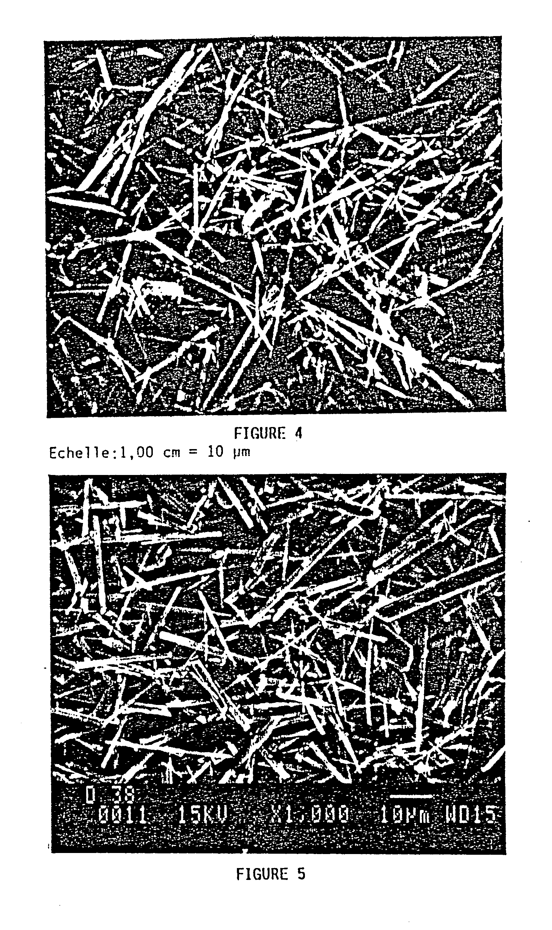

**EXEMPLE 3** (illustré par les Figures 4 et 5)

Cet exemple montre l'influence du type d'agent régulateur de recristallisation mis en oeuvre dans le cadre de l'invention.

A cette fin, du sulfate de calcium semihydraté, à température ambiante, mais résultant du traitement thermique du gypse en four Beau, de coupe granulométrique avant traitement hydroréactionnel : 5 000 micromètres, a été adjuvanté par un agent régulateur de recristallisation propre à chacune des expérimentations 3.1, 3.2 et 3.3.

L'adjuvantation a été faite selon des concentrations données exprimées en pour cent en poids par rapport à la masse totale de la suspension.

L'expérimentation 3.1 a mis en oeuvre comme agent régulateur de recristallisation du ciment PORTLAND CPA 45, l'expérimentation 3.2, du gypse broyé à la coupe granulométrique de 50 micromètres et l'expérimentation 3.3, du BMA ; ce dernier agent étant décrit dans le brevet français FR 2,228,735.

Toutes les expérimentations ont été réalisées dans le même appareillage que précédemment afin que les résultats obtenus soient comparables, et selon les critères expérimentaux exposés dans le Tableau C ci-après ainsi que les résultats propres à chaque expérimentation.

14

EP 0 378 837 A1

TABLEAU C

| Expéri-mentati-on | Granulométrie avant traitement hydroréactionnel | | Granulométrie après traitement hydroréactionnel | | Agent régulateur de recristallisation | | Suspension aqueuse de Ca SO4, 1/2 H2O | | | | Structures cristallines longilignes | | |
|---|---|---|---|---|---|---|---|---|---|---|---|---|---|
| | Coupe en micromètres | ** D50 en micromètres | Coupe en micromètres | D50 en micromètres | Type | Concentration en % en poids de la suspension | Concentration en % en poids | Température de transformation isothermique en °C | Temps de recristallisation en mn | Longueur en micromètres | Diamètre en micromètres | Facteur de Forme |
| 3.1 | 5 000 | 107 | 1 500 | 8 | CPA 45 | 0,45 | 8,64 | 45 | 30 | 20 - 60 | 5 - 4 | 5 - 15 |
| 3.2 | 5 000 | 107 | 1 500 | 8 | Gypse < 50 µ | 0,45 | 8,64 | 45 | 15 | 20 - 40 | 2 - 4 | 10 |
| 3.3 | 5 000 | 107 | 1 500 | 8 | BMA | 0,18 | 8,91 | 45 | 15 | 20 - 60 | 2 - 4 | 10 - 15 |

** D50 = diamètre statistique médian

BMA = tel que décrit dans le brevet français FR 2,228,735

Les structures cristallines longilignes obtenues dans le cadre de chaque expérimentation révèlent, à l'observation microscopique, l'existence d'aiguilles bien individualisées et dotées d'une longueur et d'un facteur de forme statistiquement bien distribués selon un modèle proche du modèle gaussien de probabilité, ainsi que l'absence d'agglomérats, de mâcles et de "fers de lance".

Les Figures 4 et 5 qui illustrent l'invention sont les observations photographiques au microscope électronique à balayage (grossissement 1 000) des structures cristallines obtenues sous les conditions des expérimentations 3.2 (Figure 4) et 3.3 (Figure 5).

La comparaison des Figures 2, 3, 4 et 5 montre le caractère maîtrisé du procédé selon l'invention qui permet la production de structures cristallines longilignes de longueur et de facteur de forme souhaités.

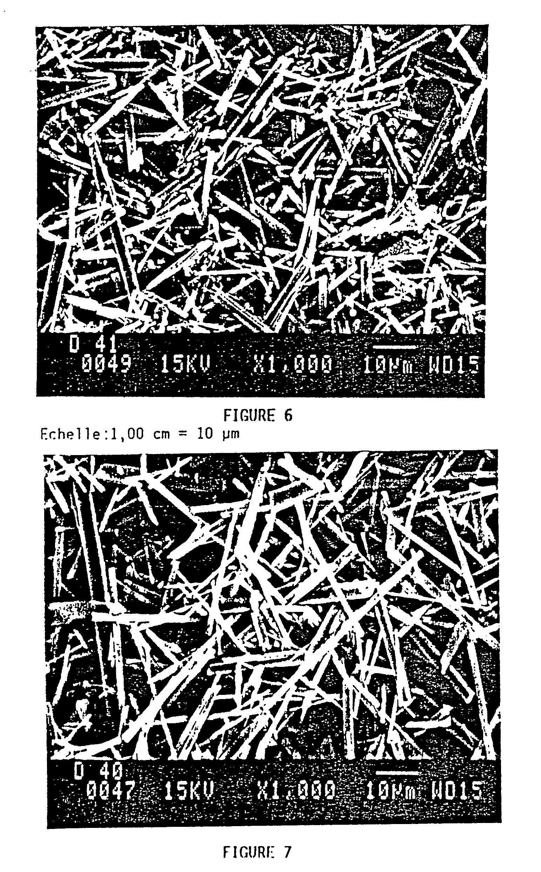

**EXEMPLE 4** (illustré par les Figures 6 et 7)

Cet exemple constitue une illustration de l'influence de la concentration du sulfate de calcium semihydraté broyé dans la suspension aqueuse.

Pour cela, du sulfate de calcium semihydraté provenant du traitement thermique du gypse en four Beau a été refroidi jusqu'à la température ambiante.

La coupe granulométrique dudit sulfate de calcium semihydraté avant traitement hydroréactionnel était de 5 000 micromètres.

Toutes les opérations de recristallisation ont été réalisées dans le même appareillage que précédemment afin que les résultats obtenus soient comparables. Les critères expérimentaux pratiqués ont été indiqués dans le Tableau D ci-après ainsi que les résultats propres à chaque expérimentation.

Les expérimentations 4.1 à 4.4 effectuées par paire en utilisant deux agents régulateurs de recristallisation différents concernent l'influence de la concentration en sulfate de calcium semihydraté, les autres caractéristiques étant maintenues constantes. Le temps de recristallisation n'a pu être maintenu fixe d'une expérimentation à l'autre en raison de l'évolution de la concentration en sulfate de calcium semihydraté dans la suspension de départ.

TABLEAU D

| Expérimentation | Granulométrie avant traitement hydroréactionnel | | Granulométrie après traitement hydroréactionnel | | Agent régulateur de recristallisation | | Suspension aqueuse de Ca SO4, 1/2 H2O | | | | Structures cristallinès longilignes | | |
|---|---|---|---|---|---|---|---|---|---|---|---|---|---|
| | Coupe en micromètres | ** D50 en micromètres | Coupe en micromètres | D50 en micromètres | Type | Concentration en % en poids de la suspension | Concentration en % en poids | Température de transformation isothermique en $^\circ$ C | Temps de recristallisation en mn | Longueur en micromètres | Diamètre en micromètres | Facteur de Forme |
| 4.1 | 5 000 | 107 | 1 500 | 8 | Gypse < 50 μm | 0,45 | 8,64 | 45 | 15 | 20 - 40 | 2 - 4 | 10 |
| 4.2 | 5 000 | 107 | 1 500 | 8 | Gypse < 50 μm | 0,07 | 1,34 | 45 | 30 | 10 - 40 | 2 - 2 | 5 - 20 |
| 4.3 | 5 000 | 107 | 1 500 | 8 | BMA | 0,18 | 8,91 | 45 | 15 | 20 - 60 | 2 - 4 | 10 - 15 |
| 4.4 | 5 000 | 107 | 1 500 | 8 | BMA | 0,03 | 1,38 | 45 | 30 | 20 - 60 | 2 - 5 | 10 - 12 |

** D50 = diamètre statistique médian

BMA = tel que décrit dans le brevet français FR 2,228,735

EP 0 378 837 A1

Les structures cristallines obtenues dans le cadre de chaque expérimentation révèlent, à l'observation au microscope électronique à balayage (grossissement 1 000), l'existence d'aiguilles, bien individualisées, et dont les longueurs et facteurs de forme sont précisés dans le Tableau D ; ces deux caractéristiques dimensionnelles étant statistiquement bien distribuées selon un modèle proche du modèle gaussien de probabilité. Dans la gamme des concentrations testées en semihydrate, il se révèle que la longueur des aiguilles varie peu. Toutefois il apparaît que plus la concentration de la suspension est faible, plus la dispersion de la taille desdites aiguilles est importante.

Les Figures 6 et 7 sont les observations au microscope électronique à balayage (grossissement 1 000) des structures cristallines obtenues sous les conditions des expérimentations 4.2 (Figure 6) et 4.4 (Figure 7).

**Revendications**

1) Procédé de préparation de sulfate de calcium dihydraté ayant l'aspect de structures cristallines longilignes à partir de sulfate de calcium semihydraté, de variété "$\beta$" et/ou "$\alpha$", caractérisé en ce que, dans le but de les doter d'une longueur et d'un facteur de forme se distribuant selon un modèle proche du modèle gaussien de probabilité, il comprend :

a) l'emploi comme matière première de sulfate de calcium semihydraté prélevé à la sortie de la zone de transformation thermique du gypse en semihydrate,

b) la présence d'au moins un agent régulateur de recristallisation, à raison de 0,01 à 6,66 pour cent en poids, par rapport à la masse totale de la suspension à former dans l'étape <c>,

c) la formation par dispersion à partir des étapes <a> et <b> d'une suspension aqueuse à une température de transformation isothermique fixée au plus égale à 60°C, ayant une teneur en matière sèche d'au plus 33,33 pour cent en poids par rapport à la masse totale de la suspension,

d) le maintien de la température à la valeur fixée pendant un temps d'au plus 60 minutes et,

e) éventuellement la séparation des structures cristallines longilignes à longueur et à facteur de forme maîtrisés selon un modèle proche du modèle gaussien de probabilité.

2) Procédé de préparation selon la revendication 1, caractérisé en ce que les particules de sulfate de calcium semihydraté constituant la matière première de l'étape <a> ont une coupe granulométrique spécifique pour l'obtention des structures cristallines longilignes de longueur et de facteur de forme préalablement fixés, au plus de 10 000 micromètres.

3) Procédé de préparation selon la revendication 1, caractérisé en ce que les particules de sulfate de calcium semihydraté constituant la matière première de l'étape <a> ont une coupe granulométrique spécifique pour l'obtention des structures cristallines longilignes de longueur et de facteur de forme préalablement fixés, préférentiellement au plus de 5 000 micromètres et très préférentiellement au plus de 1 500 micromètres.

4) Procédé de préparation selon l'une quelconque des revendications 1 à 3, caractérisé en ce que les particules de sulfate de calcium semihydraté constituant la source de matière première de l'étape <a> sont mises en oeuvre, dès la sortie de la zone de transformation thermique du gypse, à une température choisie dans le domaine délimité par les bornes 150°C et 20°C.

5) Procédé de préparation selon l'une quelconque des revendications 1 à 3, caractérisé en ce que le sulfate de calcium semihydraté est mis en oeuvre après vieillissement contrôlé des particules.

6) Procédé de préparation selon l'une quelconque des revendications 1 à 5, caractérisé en ce que dans le cas où le sulfate de calcium semihydraté de variété "$\beta$" constitue la source de matière première, ledit sulfate de calcium semihydraté est mis directement en oeuvre dans la formation par dispersion de la suspension aqueuse.

7) Procédé de préparation selon l'une quelconque des revendications 1 à 5, caractérisé en ce que dans le cas où le sulfate de calcium semihydraté de variété "$\alpha$" constitue la source de matière première, ledit sulfate de calcium semihydraté est soumis, avant d'être mis en oeuvre dans la formation par dispersion de la suspension aqueuse, à un traitement d'affinage.

8) Procédé de préparation selon la revendication 7, caractérisé en ce que le traitement d'affinage est un broyage et/ou une sélection en milieu aqueux, à une température d'au moins 70°C et préférentiellement à une température comprise entre 80°C et 100°C.

9) Procédé de préparation selon la revendication 7, caractérisé en ce que le traitement d'affinage est un broyage et/ou une sélection à sec.

10) Procédé de préparation selon l'une des revendications 7 à 9, caractérisé en ce que le broyage du sulfate de calcium semihydraté s'effectue préférentiellement par l'usage de broyeurs à marteaux, à boulets ou à doigts, en atmosphère sèche ou contrôlée.

11) Procédé de préparation selon l'une quelconque des revendications 1 à 10, caractérisé en ce que l'agent régulateur de recristallisation est de caractère chimiquement neutre et est préférentiellement choisi dans le groupe constitué par les halogénures, les sulfates, les nitrates, les silicates, les halogénosilicates de lithium, de sodium, de potas sium, d'ammonium, de calcium, de magnésium, d'aluminium, pris seuls ou en combinaison.

12) Procédé de préparation selon l'une quelconque des revendications 1 à 10, caractérisé en ce que l'agent régulateur de recristallisation est de caractère chimiquement alcalin et est préférentiellement choisi dans le groupe constitué par les hydroxydes alcalins, l'hydroxyde d'ammonium, les hydroxydes alcalino-terreux, l'hydroxyde de magnésium, l'hydroxyde de calcium, par les ciments PORTLAND, par les ciments alumineux, par les aluminates alcalins et les aluminosilicates, seuls ou en combinaison.

13) Procédé de préparation selon l'une quelconque des revendications 1 à 12, caractérisé en ce que l'agent régulateur de recristallisation est constitué de la combinaison d'au moins deux agents régulateurs de cristallisation provenant des groupes à caractère neutre et/ou à caractère alcalin.

14) Procédé de préparation selon l'une quelconque des revendications 1 à 13, caractérisé en ce que l'agent régulateur de recristallisation est introduit dans la suspension sous forme d'un mélange solide avec le sulfate de calcium semihydraté.

15) Procédé de préparation selon l'une quelconque des revendications 1 à 13, caractérisé en ce que l'agent régulateur de recristallisation est utilisé sous une forme solubilisée en milieu aqueux.

16) Procédé de préparation selon l'une quelconque des revendications 1 à 15, caractérisé en ce que la suspension aqueuse de sulfate de calcium semihydraté est formée préférentiellement à partir d'eau distillée ou déminéralisée.

17) Procédé de préparation selon l'une quelconque des revendications 1 à 16, caractérisé en ce que la suspension aqueuse de sulfate de calcium semihydraté est préparée par dispersion de la phase solide dans la phase liquide aqueuse, ladite solution étant à la température de transformation isothermique fixée au plus égale à 60°C.

18) Procédé de préparation selon l'une quelconque des revendications 1 à 17, caractérisé en ce qu'une amorce de germination est introduite dans le milieu réactionnel, ladite amorce étant formée de sulfate de calcium dihydraté éventuellement broyé et/ou sélectionné.

19) Procédé de préparation selon l'une quelconque des revendications 1 à 18, caractérisé en ce que la formation par dispersion de la suspension aqueuse met en oeuvre par rapport à la masse totale :

a) de 0,85 à au plus 33,33 pour cent en poids, de préférence de 2,5 à 17,0 pour cent en poids, et très préférentiellement de 4,0 à 11,0 pour cent en poids de sulfate de calcium semihydraté,

b) de 0,01 à 6,66 pour cent en poids, et de préférence de 0,02 à 2,5 pour cent en poids de l'agent régulateur de recristallisation,

c) de 0 à 3,33 pour cent en poids et préférentiellement de 0 à 0,85 pour cent en poids d'agents divers connus,

d) de 98,75 à au moins 66,66 pour cent en poids de la phase aqueuse.

20) Procédé de préparation selon l'une quelconque des revendications 1 à 19, caractérisé en ce que la température de transformation isothermique est généralement choisie dans l'intervalle large de 5°C à 55°C et de préférence dans l'intervalle plus étroit de 20°C à 50°C.

21) Procédé de préparation selon l'une quelconque des revendications 1 à 20, caractérisé en ce que la suspension de sulfate de calcium semihydraté est maintenue sous agitation et à la température de transformation isothermique pendant un temps généralement inférieur à 45 minutes et préférentiellement compris entre 30 et 3 minutes.

22) Procédé de préparation selon l'une quelconque des revendications 1 à 21, caractérisé en ce que les structures cristallines longilignes provenant de l'étape de séparation <e> sont soumises à un traitement thermique.

23) Structures cristallines longilignes de sulfate de calcium dihydraté selon la revendication 22, caractérisées en ce que le traitement thermique est un séchage.

24) Structures cristallines longilignes de sulfate de calcium semihydraté selon la revendication 22, caractérisées en ce que le traitement thermique est pratiqué à une température comprise entre 90°C et 250°C.

25) Structures cristallines longilignes de sulfate de calcium anhydre selon la revendication 22, caractérisées en ce que le traitement thermique est pratiqué à une température d'au moins 250°C pour l'obtention d'anhydrite II, et d'au moins 1 200°C pour l'obtention d'anhydrite I.

26) Structures cristallines longilignes selon l'une quelconque des revendications 1 à 25, caractérisées en ce qu'elles disposent à la demande d'une longueur moyenne comprise entre 2 micromètres et 200 micromètres et d'un facteur de forme compris dans l'intervalle 3/1 à 50/1.

27) Applications des structures cristallines longilignes obtenues selon l'une quelconque des revendications 1 à 26, sous la forme solide ou sous la forme d'une dispersion dans une phase liquide, aux domaines du papier, de la peinture et des matières plastiques.

89123

Echelle:1,00 cm = 10 µm

FIGURE 1

EP 0 378 837 A1

FIGURE 2
Echelle:1,00 cm = 10 µm

FIGURE 3

FIGURE 4

Echelle:1,00 cm = 10 µm

FIGURE 5

FIGURE 6
Echelle:1,00 cm = 10 µm

FIGURE 7

| Office européen des brevets | RAPPORT DE RECHERCHE EUROPEENNE | Numero de la demande |
|---|---|---|

EP  89 12 3641

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | WO-A-8 805 423 (U.S. GYPSUM)<br>* Revendications; page 5, lignes 17-20 *<br>--- | 1,11-27 | C 01 F 11/46<br>C 09 C 1/02<br>D 21 H 13/46<br>D 21 H 17/67<br>D 21 H 19/38<br>C 08 K 7/04<br>C 08 K 3/30<br>C 04 B 14/38 |
| A | GB-A-1 297 535 (GIULINI)<br>* Revendications 1,7; page 3, lignes 69-87 *<br>--- | 1,4 | |
| A | PATENT ABSTRACTS OF JAPAN, vol. 3, no. 118 (C-60), 4 octobre 1979, page 97 C 60; & JP-A-54 99 099 (KURARAY K.K.) 04-08-1979<br>* En entier *<br>--- | 1 | |
| D,A | FR-A-2 395 965 (S.K.W.)<br>--- | | |
| A | EP-A-0 056 200 (GALCERAN-VILA)<br>----- | | |

**DOMAINES TECHNIQUES RECHERCHES (Int. Cl.5)**

C 01 F 11/00

Le présent rapport a été établi pour toutes les revendications

| Lieu de la recherche | Date d'achèvement de la recherche | Examinateur |
|---|---|---|
| LA HAYE | 27-02-1990 | ZALM W.E. |